# EUROPÄISCHE PATENTSCHRIFT

(11) **EP 0 600 194 B1**
(45) Veröffentlichungstag und Bekanntmachung des Hinweises auf die Patenterteilung: **18.09.1996**
(21) Anmeldenummer: 93116370.3
(22) Anmeldetag: 08.10.1993
(51) Int. Cl.: G07C 9/00

(54) **Zutrittskontrollanlage**
Access control system
Système de contrôle d'accès

(30) Priorität: 02.12.1992 DE 4240560
(43) Veröffentlichungstag der Anmeldung: 08.06.1994
(73) Patentinhaber: Aug. Winkhaus GmbH & Co. KG, D-48291 Telgte (DE)
(72) Erfinder: Schwerdt, Franz, D-48291 Telgte (DE)
(74) Vertreter: Liska, Horst, Dr.-Ing.

(56) Entgegenhaltungen:
- WO-A-91/20026
- DE-A- 3 906 887
- US-A- 3 639 906
- PATENT ABSTRACTS OF JAPAN vol. 14, no. 420 (M-1023) 11. September 1990 & JP-A-02 164 644

## Beschreibung

Die Erfindung betrifft eine Zutrittskontrollanlage.

Zutrittskontrollanlagen sollen den Zugang zu speziell zu sichernden Bereichen, beispielsweise eines Gebäudes, aber auch die Nutzung speziell zu sichernder Geräte oder dergleichen überwachen. Weiterhin kann es Aufgabe einer Zutrittskontrollanlage sein, die Zutrittsberechtigung beispielsweise zeitabhängig festzulegen und gegebenenfalls den erfolgten Zutritt bzw. die Nutzung zu dokumentieren.

Die Zutrittsberechtigung wird üblicherweise durch Ausweiskarten nachgewiesen, die in kodierter Form Berechtigungsdaten, die die Zutritts- oder Nutzungsberechtigung aber auch die Identität des Berechtigten repräsentieren, enthalten. An den Zugangstüren des zu schützenden Bereichs oder an dem zu nutzenden Gerät sind hierfür Kartenlesegeräte, gegebenenfalls auch sonstige Dateneingabegeräte, wie zum Beispiel Tastaturen, vorgesehen. Die Lese-und/oder Eingabegeräte sind mit einer Zentrale über Einzelleitungen oder einen Datenbus verbunden, in der die Berechtigungsdaten anhand vorgegebener Berechtigungsdaten, die in einem zentralen Datenspeicher gespeichert sind, überprüft werden. Bei Übereinstimmung der Berechtigungsdaten wird über die Zentrale eine der Lese- und/oder Eingabevorrichtung zugeordnete Sperrvorrichtung, beispielsweise ein elektromotorisch angetriebenes Schloß oder eine sonstige Blockiervorrichtung beispielsweise der Zugangstüre entsperrt. In dem Datenspeicher der Zentrale sind üblicherweise zusätzlich Zutrittskontrolldaten gespeichert, über die die Zutrittsberechtigung von weiteren Kriterien, beispielsweise der Tageszeit oder der Nutzungsdauer oder dergleichen abhängig gemacht werden kann. Die Zentrale kann ferner Dokumentationsdaten speichern, die eine spätere Überprüfung der Identität des Benutzers, des Benutzungszeitpunkts und der Nutzungsdauer oder dergleichen erlauben.

Aus der Zeitschrift "Bauelemente Bau" 4/1992, Seite 146 ist es bekannt, eine Zutrittskontrollanlage mit einer mechanischen, durch Schlüssel betätigbaren Schließanlage zu kombinieren. Die Schlüssel der Schließanlage sperren die Schlösser mechanisch, enthalten aber zusätzlich eine elektronische Schaltung, die in einem Datenspeicher von einem Lesegerät des Schlosses lesbare Berechtigungsdaten speichert. Die Berechtigungsdaten werden nicht nur zur Erhöhung der Schließsicherheit des Schlosses ausgenutzt, sondern auch für die Zwecke der Zutrittskontrolle.

Aus der EP-A-324 096 ist es bekannt, in einem Profil-Schließzylinder, der durch Flachschlüssel oder dergleichen mechanisch sperrbar ist, zusätzlich einen Detektor zum Lesen von in einem schlüsselseitigen Datenspeicher gespeicherten Daten als auch eine elektromagnetische Sperrvorrichtung unterzubringen, über die der Zylinderkern des Schließzylinders unabhängig von der Sperre durch mechanische, den Schlüssel abtastende Zuhaltungen blockierbar ist.

Aus der DE-A-39 06 887 ist es schließlich bekannt, Zutrittskontrolldaten, die die Nutzungsberechtigung einer an sich berechtigten Person beschränken, im Datenspeicher eines elektronischen Schlüssels zu speichern, um ihn auf diese Weise in die Zutrittskontrollanlage mit einzubeziehen.

Herkömmliche Zutrittskontrollanlagen verwenden in aller Regel spezifische Datenübertragungskodes, die mit speziellen Übertragungsformaten und spezieller Übertragungsrate bzw. Übertragungsgeschwindigkeit zwischen dem Datenlese- und/oder -eingabegerät einerseits und der Zentrale andererseits übertragen werden. Herkömmliche Zutrittskontrollanlagen lassen sich damit, wenn überhaupt, nur mit speziell konzipierten elektronischen Schließanlagen der vorstehend erläuterten Art kombinieren, um auf diese Weise schlüsselbetätigte Schlösser und dergleichen mit in die Funktion der Zutrittskontrollanlage einzubeziehen.

Es ist Aufgabe der Erfindung, einen Weg zu zeigen, wie Zutrittskontrollanlagen herkömmlicher Art unabhängig von deren Datenübertragungsformat, Geschwindigkeit und Dateninhalt mit einer mechanischen Schließanlage kombiniert werden können.

Die Erfindung geht hierbei aus von einer Zutrittskontrollanlage, umfassend:
eine Zentrale mit einem Zutrittskontrolldaten speichernden, zentralen Datenspeicher,
mehrere mit der Zentrale über wenigstens eine Datenleitung verbundene Lese- und/oder Eingabeeinrichtungen für Berechtigungsdaten,
mehrere jeweils zumindest einer der Lese- und/oder Eingabeeinrichtungen zugeordnete Zutritts-Sperrvorrichtungen, die bei Übereinstimmung der über die zugeordnete Lese- und/oder Eingabeeinrichtung eingegebenen Berechtigungsdaten mit vorgegebenen Berechtigungsdaten abhängig von den in dem zentralen Datenspeicher gespeicherten Zutrittskontrolldaten entsperrbar sind und/oder abhängig von ihrer Betätigung Zutrittskontrolldaten an den zentralen Datenspeicher abgeben, wobei zumindest eine der Lese- und/oder Eingabeeinrichtungen eine Baueinheit mit einem ein mechanisches Schlüsselgeheimnis eines Schlüssels mechanisch abtastenden Schloß, insbesondere einem Schließzylinder, bildet, und in einem schlüsselseitigen Datenspeicher einer zu einer Baueinheit mit dem Schlüssel vereinigten, schlüsselseitigen Steuerung von der Lese- und/oder Eingabeeinrichtung lesbare Berechtigungsdaten gespeichert sind.

Bei einer solchen Zutrittskontrollanlage ist erfindungsgemäß vorgesehen, daß zumindest die dem Schloß zugeordnete Lese- und/oder Eingabeeinrichtung an die Zentrale über ein Interface angeschlossen ist, wobei die Datenübertragungsrate und/oder das Datenübertragungsformat für die Datenübertragung zwischen Interface und Zentrale änderbar ist, und daß in den schlüsselseitigen Datenspeicher zusätzlich zu den Berechtigungsdaten Steuerdaten gespeichert sind, die die Datenübertragungsrate und/oder das Datenübertragungsformat festlegen.

Das Interface transformiert die von der schloßseitigen Steuerung aus dem schlüsselseitigen Datenspeicher gelesenen Berechtigungsdaten in ein Format, dessen Form und Übertragungsgeschwindigkeit der Zutrittskontrollanlage angepaßt ist, in welcher die Schließanlage mit ausgenutzt werden soll. Dieser Idee liegt die Überlegung zugrunde, daß es sich bei einem elektronischen Schlüssel ohnehin um ein Unikat handelt, so daß die das Format und die Übertragungsrate bestimmenden Steuerdaten zusammen mit den die Identifizierung des Berechtigten und das Schlüsselgeheimnis des elektronischen Schlüssels beinhaltenden Berechtigungsdaten als Abschluß der Fertigung des elektronischen Schlüssels in diesen einprogrammiert werden können.

Das Interface kann als Hardwareschaltung bzw. Hardwareinterface und/oder als Softwareinterface ausgebildet sein. Es korrespondiert mit der schloßseitigen Steuerung in einer Protokollstruktur, in der ein im schlüsselseitigen Datenspeicher gespeicherter Datensatz zunächst in einen Datenspeicher der schloßseitigen Steuerung eingeschrieben wird. Der Datensatz enthält neben den Berechtigungsdaten und den Steuerdaten für das Interface auch Daten über die Länge des Datensatzes. Auf diese Weise ist eine besonders variable Anpassung das Interface an unterschiedlichste Zutrittskontrollanlagen möglich. Da der Datensatz zunächst in dem schloßseitigen Datenspeicher gespeichert wird, können die aus dem schlüsselseitigen Speicher ausgelesenen Daten überprüft werden, bevor sie an das Interface weitergeleitet werden. Das Interface schließlich überträgt die in diesem Datensatz enthaltenen Berechtigungsdaten, in einem der Zutrittskontrollanlagen angepaßten Format, zur Überprüfung der Zutrittsberechtigung an die Zentrale.

Die Übertragung der Berechtigungsdaten an die Zentrale geschieht zweckmäßigerweise über Optokoppler. Auf diese Weise läßt sich eine galvanische Trennung der schloßseitigen Steuerung von der Zentrale erreichen, und die Schleifenströme, auf der die schloßseitige Steuerung mit der Zentrale verbindenden Leitung lassen sich dem Einzelfall entsprechend anpassen.

Zweckmäßigerweise bildet die Sperrvorrichtung eine Baueinheit mit dem durch den Schlüssel mechanisch sperrbaren Schloß und blockiert eine manuelle Betätigung des Schlosses. Die Sperrvorrichtung kann, wie bei Zutrittskontrollanlagen üblich, von der Zentrale aus gesteuert werden, sofern die von der Lese- und/oder Eingabeeinrichtung gelesenen Berechtigungsdaten über das Interface zur Zentrale hin übertragen werden. Zweckmäßigerweise ist jedoch die Sperrvorrichtung von der schloßseitigen Steuerung abhängig von den im schlüsselseitigen Datenspeicher gespeicherten Berechtigungsdaten unmittelbar steuerbar, so daß die elektronische Schließanlage ohne schaltungstechnische Änderungen auch unabhängig von der Zutrittskontrollanlage eingesetzt werden kann. Zweckmäßigerweise ist in diesem Zusammenhang jedoch vorgesehen, daß Zugangskontrolldaten aus dem zentralen Speicher über die Interface-Schaltung der schloßseitigen Steuerung zugeführt werden, die damit ihrerseits die Zutrittskontrollinformationen auswerten kann.

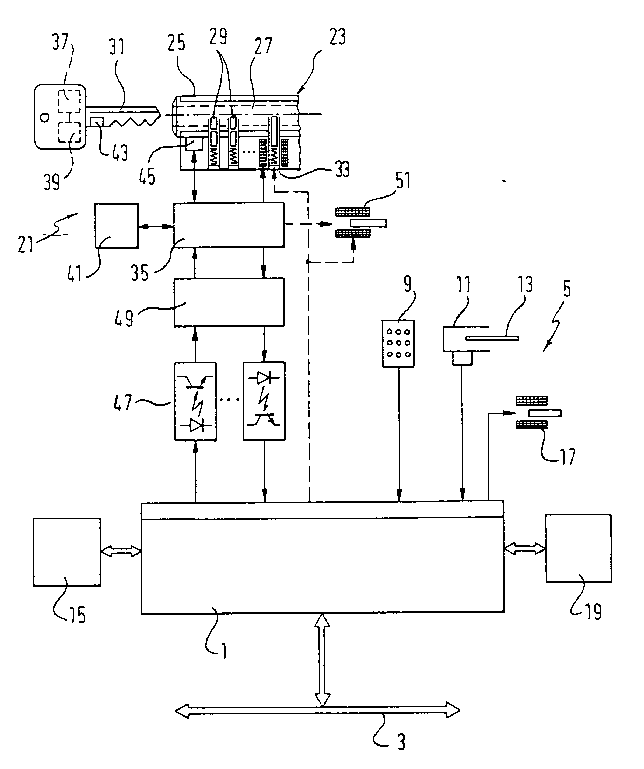

Im folgenden wird ein Ausführungsbeispiel der Erfindung anhand einer Zeichnung näher erläutert. Die Zeichnung zeigt ein schematisches Blockschaltbild einer erfindungsgemäßen Zutrittskontrollanlage.

Die Zutrittskontrollanlage umfaßt eine beispielsweise als Mikroprozessor oder dergleichen ausgebildete Zentrale 1, an die über entsprechende Leitungen mehrere Kontrolleinheiten 5 angeschlossen sind. Die Kontrolleinheiten 5, von denen die Figur lediglich eine zeigt, sind im Bereich der zu überwachenden Türen angeordnet und umfassen jeweils ein Dateneingabegerät und mindestens eine, diesem Eingabegerät zugeordnete Sperrvorrichtung. Bei dem Dateneingabegerät kann es sich um eine Tastatur 9 zum Eingeben von Berechtigungsdaten, die den Benutzer identifizieren und/oder ein Lesegerät 11, welches die Berechtigungsdaten in kodierter Form auf einer den Benutzer identifizierenden Ausweiskarte 13 enthält, handeln. In der Zentrale 1 werden die an der Tastatur 9 eingegebenen oder von dem Lesegerät 11 gelesenen Berechtigungsdaten mit vorbestimmten Berechtigungsdaten verglichen, die in einem Datenspeicher 15 der Zentrale 1 gespeichert sind. Bei Übereinstimmung der Berechtigungsdaten entsperrt die Zentrale 1 eine Sperrvorrichtung 17 und gibt den Zutritt zu dem zu kontrollierenden Bereich frei.

Soweit vorstehend erläutert, handelt es sich bei der Zutrittskontrollanlage um eine herkömmliche Anlage dieser Art, die entsprechend dem gewünschten Anwendungsgebiet vielfach variiert werden kann. Wie bei 19 angedeutet, kann beispielsweise die Zentrale Dateneingabe- und/oder -ausgabevorrichtungen umfassen, über die die Berechtigungsdaten programmiert und insbesondere auch Zutrittskontrolldaten in den Datenspeicher 15 eingegeben werden können. Die Zutrittskontrolldaten können zusätzlich zu den Berechtigungsdaten weitere Bedingungen für die Zutrittsberechtigung vorgeben, so daß die Zutrittsberechtigung zum Beispiel zeitabhängig auf bestimmte Tageszeiten beschränkt werden kann. Die Zutrittsberechtigung kann auf diese Weise von einer Vielzahl Parameter abhängig gemacht werden.

Der Zutrittskontrollanlage sind weitere Kontrolleinheiten 21 zugeordnet, die die Überwachungsfunktion der Anlage mit der Schließfunktion einer mechanischen Schließanlage verbindet. Die Schließanlage umfaßt nicht näher dargestellte, durch Profilschließzylinder 23 verriegelbare Schlösser. Die Schließzylinder 23 haben einen drehbar in einem Zylindergehäuse 25 aufgenommenen Zylinderkern 27, der durch federnd vorgespannte Zuhaltungsstiftpaare 29 blockierbar ist. Die Zuhaltungsstiftpaare 29 tasten in an sich bekannter Weise einen Schlüssel 31 ab und geben bei Übereinstimmung des mechanischen Schlüsselgeheimnisses mit der Zuhaltungsstiftkonfiguration den Zylinderkern 27 zur Drehung frei.

Der Schließzylinder 23 enthält zusätzlich eine Sperrvorrichtung 33, beispielsweise in Form eines elektromagnetisch entsperrbaren Blockierriegels, der von einer schloßseitigen Steuerung 35 entsperrbar ist, wenn in einem Datenspeicher 37 einer in dem Schlüssel 31 enthaltenen Steuerschaltung 39 gespeicherte Berechtigungsdaten mit in einem Datenspeicher 41 der schloßseitigen Steuerung 35 gespeicherten, vorbestimmten Berechtigungsdaten übereinstimmen. Für eine bidirektionale Datenübertragung enthalten sowohl der Schlüssel 31 als auch der Schließzylinder 23 Datenübertragungsmittel 43 bzw. 45, beispielsweise in Form induktiv miteinander koppelbarer Spulen. Für die Verbindung mit der Zentrale 1 der Zutrittskontrollanlage ist die Steuerschaltung 35 bidirektional über ein Interface 49, entweder direkt oder zur galvanischen Entkopplung über Optokoppler (wie bei 47 angedeutet) oder dergleichen, verbunden. Das Interface 49 ist Bestandteil der schloßseitigen Steuerung 35 und kann entweder als Hardware und/oder als Software ausgebildet sein.

Die in dem Datenspeicher 37 des Schlüssels 31 gespeicherten Berechtigungsdaten umfassen für die Verwendung in der Zutrittskontrollanlage nicht nur Schlüsselgeheimnisdaten, durch die die Schließsicherheit des Schließzylinders 23 erhöht wird, sondern auch Daten, die den Nutzungsberechtigten identifizieren. Diese Daten werden über das Interface an die Zentrale 1 für die Überwachung und Dokumentation der Zutrittsnutzung übertragen. Die Zentrale 1 kann, wie dies anhand der Kontrolleinheiten 5 erläutert wurde, das Entsperren der Sperrvorrichtung 33 von weiteren, durch Zutrittskontrolldaten des Datenspeichers 15 gegebenen Parametern abhängig machen. Das Entsperren der Sperrvorrichtung 33 kann von der Zentrale 1 aus wahlweise direkt oder durch Anlegen eines entsprechenden Signals an das Interface 49 geschehen.

Die Kontrolleinheiten 21 können an und für sich unabhängig von einer Zutrittskontrollanlage ausschließlich in ihrer Funktion als Schließanlage eingesetzt werden. Um diese damit auch anderweitig einsetzbare Schließanlage möglichst variabel mit herkömmlichen Zutrittskontrollanlagen verbinden zu können, ist das Datenübertragungsformat und die Datenübertragungsrate des Interface 49 programmierbar. Die Einstellung des Datenübertragungsformats und der Datenübertragungsrate erfolgt in Abhängigkeit von Steuerdaten, die zusätzlich zu den Berechtigungsdaten in dem Datenspeicher 37 des Schlüssels 31 gespeichert sind. Weiterhin umfaßt der in dem Datenspeicher 37 gespeicherte Datensatz Daten über seine Länge. Der aus dem Datenspeicher 37 in einer Protokollstruktur ausgelesene Datensatz wird in den Datenspeicher 41 der Steuerschaltung 35 eingeschrieben, worauf die Steuerschaltung 35 das Interface 49 auf das Übertragungsformat und die Übertragungsrate der Zentrale 1 einstellt.
Danach können die für die Identifizierung des Nutzungsberechtigten erforderlichen Daten wie auch die Zutrittskontrolldaten zwischen der Steuerschaltung 35 und der Zentrale 1 ausgetauscht werden.

Wie bei 51 angedeutet, kann zusätzlich oder auch alternativ zur Sperrvorrichtung 33 eine entfernt vom Schließzylinder 23 angeordnete Sperrvorrichtung vorgesehen sein, die beispielsweise die Entriegelung des Schlosses anderweitig sperrt. Es versteht sich, daß anstelle einer Sperrvorrichtung, wie sie vorstehend bei 17, 33 oder 51 angedeutet ist, auch sonstige Sperrmittel verwendbar sind, die den Zutritt zu dem zu überwachenden Bereich oder die Nutzung eines Geräts oder dergleichen verhindern können. Insbesondere kann vorgesehen sein, daß anstelle der mechanischen Verriegelung auch abschaltbare und damit sperrbare Türöffnungsantriebe vorgesehen sein können.

Die Verwaltung der Berechtigungsdaten kann insbesondere unabhängig vom betreffenden Datenträger - Ausweiskarte 13 oder Schlüssel 31 - erfolgen, beispielsweise mittels konventioneller Verwaltungsprogramme, wie sie bei der Verwaltung von Berechtigungsdaten im Falle von Ausweiskarten herangezogen werden.

Insbesondere können bei einer Zugangskontrollanlage nach der Erfindung die im schlüsselseitigen Datenspeicher 37 Programmierten Berechtigungsdaten identisch mit den Berechtigungsdaten einer Ausweiskarte 13 sein.

Ferner sei noch darauf hingewiesen, daß die Datenübertragung zwischen der schlüsselseitigen Steuerung 39 und der schloßseitigen Steuerung 35 gegebenenfalls verschlüsselt erfolgen kann.

## Patentansprüche

1. Zutrittskontrollanlage, umfassend
- eine Zentrale (1) mit einem Zutrittskontrolldaten speichernden, zentralen Datenspeicher (15),
- mehrere mit der Zentrale (1) über wenigstens eine Datenleitung verbundene Lese- und/oder Eingabeeinrichtungen (9, 11, 45) für Berechtigungsdaten,
- mehrere jeweils zumindest einer der Lese- und/oder Eingabeeinrichtungen (9, 11, 45) zugeordnete Zutritts-Sperrvorrichtungen (17, 33, 51), die bei Übereinstimmung der über die zugeordnete Lese- und/oder Eingabeeinrichtung (9, 11, 45) eingegebenen Berechtigungsdaten mit vorgegebenen Berechtigungsdaten abhängig von den in dem zentralen Datenspeicher (15) gespeicherten Zutrittskontrolldaten entsperrbar sind und/oder abhängig von ihrer Betätigung Zutrittskontrolldaten an den zentralen Datenspeicher (15) abgeben,
wobei zumindest eine (45) der Lese- und/oder Eingabeeinrichtungen (9, 11, 45) eine Baueinheit mit einem ein mechanisches Schlüsselgeheimnis eines Schlüssels (31) mechanisch abtastenden Schloß (23), insbesondere einem Schließzylinder, bildet und in einem schlüsselseitigen Datenspeicher (37) einer zu einer Baueinheit mit dem Schlüssel (31) vereinigten schlüsselseitigen Steuerung (39) von der Lese- und/oder Eingabeeinrichtung (45) lesbare Berechtigungsdaten gespeichert sind, **dadurch gekennzeichnet,** daß zumindest die dem Schloß (23) zugeordnete Lese- und/oder Eingabeeinrichtung (45) an die Zentrale (1) über ein Interface (49) angeschlossen ist, dessen Datenübertragungsrate und/oder dessen Datenübertragungsformat für die Datenübertragung zwischen Interface (49) und Zentrale (1) änderbar ist, und daß in dem schlüsselseitigen Datenspeicher (37) zusätzlich zu den Berechtigungsdaten Steuerdaten gespeichert sind, die die Datenübertragungsrate und/ oder das Datenübertragungsformat des Interfaces festlegen.

2. Zutrittskontrollanlage nach Anspruch 1, dadurch gekennzeichnet, daß der schlüsselseitige Datenspeicher (37) einen Datensatz speichert, der neben den Berechtigungsdaten und den Steuerdaten auch Daten über die Länge des Datensatzes umfaßt.

3. Zutrittskontrollanlage nach Anspruch 1 oder 2, dadurch gekennzeichnet, daß zumindest die dem Schloß (23) zugeordnete Lese- und/oder Eingabeeinrichtung (45) eine schloßseitige Steuerung (35) mit einem schloßseitigen Datenspeicher (41) aufweist, in den die von der Lese- und/oder Eingabeeinrichtung (45) aus dem schlüsselseitigen Datenspeicher (37) gelesenen Daten einschreibbar sind, und daß die Interface-Schaltung (49) abhängig von den in den schloßseitigen Datenspeicher (41) eingeschriebenen Daten steuerbar ist.

4. Zutrittskontrollanlage nach Anspruch 3, dadurch gekennzeichnet, daß die schloßseitige Steuerung (35) über das Interface (49) und über Optokoppler (47) an die Zentrale (1) angeschlossen ist.

5. Zutrittskontrollanlage nach einem der Ansprüche 1 bis 4, dadurch gekennzeichnet, daß die Sperrvorrichtung (33) eine Baueinheit mit dem durch den Schlüssel (31) mechanisch sperrbaren Schloß (23) bildet und eine manuelle Betätigung des Schlosses (23) blockiert und daß die Sperrvorrichtung (33) von der schloßseitigen Steuerung (35) abhängig von den im schlüsselseitigen Datenspeicher (37) gespeicherten Berechtigungsdaten und/oder über das Interface (49) zugeführten Zugangskontrolldaten steuerbar ist.

6. Zutrittskontrollanlage nach einem der Ansprüche 1 bis 4, dadurch gekennzeichnet, daß die Sperrvorrichtung (33) eine Baueinheit mit dem durch den Schlüssel (31) mechanisch sperrbaren Schloß (23) bildet und eine manuelle Betätigung des Schlosses (23) blockiert und daß die Sperrvorrichtung (33) von der schloßseitigen Steuerung (35) abhängig von den im schlüsselseitigen Datenspeicher (37) gespeicherten Berechtigungsdaten steuerbar ist, wobei Zugangskontrolldaten aus dem zentralen Datenspeicher (15) über das Interface (49) der schloßseitigen Steuerung (35) zuführbar sind, so daß die schloßseitige Steuerung (35) mit diesen Zugangskontrolldaten die Berechtigungsdaten auswerten kann.

7. Zutrittskontrollanlage nach Anspruch 5 oder 6, dadurch gekennzeichnet, daß die Sperrvorrichtung (33) einen Zylinderkern (27) des Schließzylinders blockiert.

## Claims

1. An access control installation, comprising
- a central station (1) with a central data store (15) storing access control data,
- a plurality of read and/or input devices (9, 11, 45) for authorisation data connected with the central station (1) by means of at least one data line,
- a plurality of access blocking devices (17, 33, 51) which are each associated with at least one of the read and/or input devices (9, 11, 45) and which may be unblocked if the authorisation data input via the associated read and/or input device (9, 11, 45) correspond to given authorisation data dependent on the access control data stored in the central data store (15) and/or deliver access control data to the central data store in dependence on their actuation,
at least one (45) of the read and/or input devices (9, 11, 45) forming a unit with a lock (23), especially a cylinder lock, which mechanically reads the mechanical code of a key (31) and authorisation data readable by the read and/or input device (45) being stored in a data store (37) on the key (31), said data store (37) constituting part of a control system (39) on the key (31), which control system (39) is an integral part of said key (31), characterised in that at least the read and/or input device (45) associated with the lock (23) is connected to the central station (1) via an interface (49) whose data transmission rate and/or whose data transmission format for data transmission between interface (49) and central station (1) may be modified, and in that, in addition to the authorisation data, control data may be stored in the data store (37) on the key (31), which control data determine the data transmission rate and/or the data transmission format of the interface.

2. An access control installation according to claim 1, characterised in that the data store (37) on the key (31) stores a set of data which comprises, in addition to the authorisation data and the control data, also data relating to the length of the data set.

3. An access control installation according to claim 1 or claim 2, characterised in that at least the read and/or input device (45) associated with the lock (23) comprises a control system (35) on the lock (23) with a data store (41) also on the lock (23), into which the data read from the data store (37) on the key (31) by the read and/or input device (45) may be entered, and in that control of the interface circuit (49) may be dependent on the data entered into the data store (41) on the lock (23).

4. An access control installation according to claim 3, characterised in that the control system (35) on the lock (23) is connected to the central station (1) by the interface (49) and optoelectronic couplers (47).

5. An access control installation according to any one of claims 1 to 4, characterised in that the blocking device (33) forms a unit with the lock (23) mechanically lockable by the key (31) and blocks manual operation of the lock (23) and in that the blocking device (33) may be controlled by the control system (35) on the lock (23) in dependence on the authorisation data stored in the data store (37) on the key (31) and/or on access control data supplied via the interface (49).

6. An access control installation according to any one of claims 1 to 4, characterised in that the blocking device (33) forms a unit with the lock (23) mechanically lockable by the key (31) and blocks manual operation of the lock (23) and in that the blocking device (33) may be controlled by the control system (35) on the lock (23) in dependence on the authorisation data stored in the data store (37) on the key (31), access control data being supplied to the control system (35) on the lock (23) from the central data store (15) via the interface (49), such that the control system (35) on the lock (23) may evaluate the authorisation data with these access control data.

7. An access control installation according to claim 5 or claim 6, characterised in that the blocking device (33) blocks a cylinder plug (27) in the cylinder lock.

## Revendications

1. Système de contrôle d'accès comportant
- une centrale (1) avec une mémoire de données (15) centrale, mémorisant des données de contrôle d'accès,
- plusieurs dispositifs de lecture et/ou de saisie (9, 11, 45), reliés à la centrale (1) par au moins une ligne de données, pour des données d'autorisation,
- plusieurs dispositifs de verrouillage d'accès (17, 33, 51), associés chacun au moins à l'un des dispositifs de lecture et/ou de saisie (9, 11, 45), qui en cas de concordance des données d'autorisation, introduites par le dispositif de lecture et/ou de saisie (9, 11, 45) correspondant, avec des données d'autorisation préétablies, peuvent être déverrouillés en fonction des données de contrôle d'accès mémorisées dans la mémoire de données centrale (15) et/ou délivrent des données de contrôle d'accès à la mémoire de données centrale (15), en fonction de leur actionnement,
dans lequel au moins un (45) des dispositifs de lecture et/ou de saisie (9, 11, 45) forme une unité constructive avec une serrure (23), en particulier un cylindre de fermeture, palpant mécaniquement une combinaison de clé mécanique d'une clé (31), et dans lequel des données d'autorisation lisibles par le dispositif de lecture et/ou de saisie (45), sont mémorisées dans une mémoire de données (37) côté clé d'une commande (39) côté clé, réunie en une unité constructive avec la clé (31),
caractérisé en ce qu'au moins le dispositif de lecture et/ou de saisie (45), associé à la serrure (23), est raccordé à la centrale (1) par une interface (49), dont le taux de transmission de données et/ou le format de transmission de données est variable pour la transmission des données entre l'interface (49) et la centrale (1), et en ce que dans la mémoire de données (37) côté clé sont mémorisées, en plus des données d'autorisation, des données de commande, qui définissent le taux de transmission de données et/ou le format de transmission de données de l'interface.

2. Système de contrôle d'accès selon la revendication 1, caractérisé en ce que la mémoire de données (37) côté clé mémorise un bloc de données, qui outre les données d'autorisation et les données de commande comprend aussi des données concernant la longueur du bloc de données.

3. Système de contrôle d'accès selon la revendication 1 ou 2, caractérisé en ce qu'au moins le dispositif de lecture et/ou de saisie (45), associé à la serrure (23), comporte une commande (35) côté serrure avec une mémoire de données (41) côté serrure, dans laquelle peuvent être enregistrées les données lues par le dispositif de lecture et/ou de saisie (45) dans la mémoire de données (37) côté clé, et en ce que le circuit d'interface (49) peut être commandé en fonction des données enregistrées dans la mémoire de données (41) côté serrure.

4. Système de contrôle d'accès selon la revendication 3, caractérisé en ce que la commande (35) côté serrure est raccordée à la centrale (1), par l'interface (49) et par des coupleurs opta-électroniques (47).

5. Système de contrôle d'accès selon l'une des revendications 1 à 4, caractérisé en ce que le dispositif de verrouillage (33) forme une unité constructive avec la serrure (23) verrouillable mécaniquement par la clé (31) et bloque un actionnement manuel de la serrure (23) et en ce que le dispositif de verrouillage (33) peut être commandé par la commande (35) côté serrure en fonction des données d'autorisation, mémorisées dans la mémoire de données (37) côté clé, et/ou de données de contrôle d'accès transmises par l'interface (49).

6. Système de contrôle d'accès selon l'une des revendications 1 à 4, caractérisé en ce que le dispositif de verrouillage (33) forme une unité constructive avec la serrure (23), verrouillable mécaniquement au moyen de la clé (31) et bloque un actionnement manuel de la serrure (23) et en ce que le dispositif de verrouillage (33) peut être commandé par la commande (35) côté serrure en fonction des données d'autorisation, mémorisées dans la mémoire de données (37) côté clé, des données de contrôle d'accès provenant de la mémoire de données centrale (15) pouvant être transmises par l'interface (49) à la commande (35) côté serrure, de manière que la commande (35) côté serrure puisse exploiter les données d'autorisation avec ces données de contrôle d'accès.

7. Système de contrôle d'accès selon la revendication 5 ou 6, caractérisé en ce que le dispositif de verrouillage (33) bloque un noyau de cylindre (27) du cylindre de fermeture.
